(19) **Europäisches Patentamt**
**European Patent Office**
**Office européen des brevets**

(11) **EP 2 305 620 B1**

(12) **EUROPEAN PATENT SPECIFICATION**

(45) Date of publication and mention
of the grant of the patent:
**01.05.2013  Bulletin 2013/18**

(51) Int Cl.:
***C04B 28/02*** *(2006.01)*

(21) Application number: **09172189.4**

(22) Date of filing: **05.10.2009**

(54) **The use of a concrete material comprising aggregates, cement and a cement additive comprising a mixture of three zeolites for making a prefab construction material.**

Die Verwendung einer Betonmaterial, umfassend Aggregate, Zement und ein Zementadditiv enthaltend eine Mischung aus drei Zeolithe zur Herstellung einer vorgefertigten Baumaterial.

L'utilisation d'un matériau de béton comprenant des agrégats, du ciment et un additif pour ciment comprenant un mélange de trois zéolithes, pour la fabrication d'un matériau de construction préfabriquée.

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**06.04.2011  Bulletin 2011/14**

(73) Proprietor: **MGX Patent B.V.**
**5234 GD 's-Hertogenbosch (NL)**

(72) Inventors:
• **Van Bakel, Petrus Kálmán**
**5241 CB Rosmalen (NL)**

• **Tyagi, Youva Raj**
**5216 CZ 's-Hertogenbosch (NL)**

(74) Representative: **Hatzmann, Martin et al**
**Vereenigde**
**Johan de Wittlaan 7**
**2517 JR Den Haag (NL)**

(56) References cited:
**EP-A1- 2 113 494      WO-A1-2007/028952**
**US-A1- 2004 187 740**

## Description

The present invention relates to the use of a concrete material and especially to the use of concrete compositions comprising waste material. Further, the invention allows immobilising many different types of contaminants present in waste materials. The invention allows to encapsulate waste material but also other filling materials and to prepare concrete with high bending strength and to use it in making construction materials. Waste materials may be contaminated or polluted soil, industrial residues, different types of slurries and sludge residuals, construction waste materials, etc. In more detail, the concrete composition comprises a cement additive which allows the cement to effectively encapsulate waste material, contaminates and other fillers so that the waste material and/or other fillers become stabilized and any pollutants present therein become immobilised. In this way, any pollutants contained in the waste material will not leach out or if these leach the amounts set remain below acceptable and allowed limits according to International accepted legislation and standards. That is, pollutants do not or hardly (that is, below acceptable and allowable limits) leach out or otherwise escape from the composition. According to internationally accepted standards, the waste material is immobilised by the present invention.

It is desirable to obtain materials and especially concrete-based materials having favourable engineering properties like high compressive strength, high bending strength, and/or good point bending properties.

Particularly, it is an aim of the present invention to provide a concrete, and preferably to use waste material and residual material as a base material in such a concrete, and concrete so produced which has properties similar to conventional concrete, be it that the parameters "compressive strength", "tensile strength", "bending strength" and "E modulus" can be adjusted, independent from the final strength of the concrete. In conventional concrete (as defined herein below) these parameters are related to each other and tend to go together.

In addition, the invention aims to a method of immobilisation of contaminants in waste materials in concrete compositions for use as construction material, and especially as value added construction material.

The invention should enhance the encapsulation to immobilise (potentially) hazardous components present in the waste materials. Particularly, it is desired to immobilise pollutants in such a way that the immobilised products meet the requirements and specifications established by governmental norms and legislation and to use these products as construction material.

More specifically, the invention aims to provide concrete material, which possesses high quality, and especially to provide concrete with a suitable compressive strength, bending strength and E modulus (MPa), together with high elasticity. Particularly, parameters such as compressive strength, tensile strength, bending strength and elastic modulus of the concrete should preferably be varied independently from each other and from the final strength of the material. This is valuable because it may overcome or effectively control problems of concrete cracks, erosion, shrinks etc.

The industrial world is confronted with a continuously growing amount of residues and waste materials, while simultaneously in the construction and building sector there is a continuous demand for primary raw materials, like sand, gravel and aggregates and so on, which are getting depleted with time. An important object of the present invention is to make use of the available "unwanted" residues and waste materials as a raw material to make concrete which can be used in building materials for construction and other applications. So, an aim of the invention remains to immobilise waste materials with contaminates permanently, or at least the pollutants present therein, in cement, and by doing so creating useful building materials, such as power blocks, kerbsides and - stones, base and foundation materials and road construction materials, floors, decorative concrete, filling material, beams, etc., which building materials may have added value, especially in view of the properties mentioned in the previous paragraph. Simultaneously, the invention also aims to add value to waste material and to achieve sustainable environmental protection, in addition to providing a viable and effective technology for waste utilization as compared to the currently existing and prevailing practices of waste management. In addition, the invention potentially reduces the amount of cement in the construction material, which immediately results in a reduction of $CO_2$ production.

Concrete is a construction material composed of cement (such as Portland cement) as well as other cementitious materials such as fly ash and slag cement, aggregate (generally a coarse aggregate such as gravel, limestone, or granite, plus a fine aggregate such as sand), water, and chemical admixtures. Such concrete will be herein referred to as conventional concrete.

Varying the amounts and sort of gravel and the amounts and sort of cement leads to the variation of concrete characteristics. The final strength of concrete is dependent on the water/cement ratio, which is the weight ratio of water to cement as one of the critical factors. It has an important influence on the quality of concrete produced. A lower water-cement ratio leads to higher strength and durability, but makes the concrete at the same time more difficult to process.

Important mechanical characteristics of concrete are compressive strength, tensile strength as well as bending strength. Conventional concrete has relatively high compressive strength, but significantly lower tensile and bending strength. The tensile strength of conventional concrete is about 10%-15% of its compressive strength. As a result, without compensating, concrete would almost always fail from tensile stresses - even when loaded in compression. The practical implication of this is that concrete elements subjected to tensile stresses must be reinforced with materials that are strong in tension such as steel, reinforcing bars and structural fibers.

A further important object of the present invention is to provide concrete materials, wherein the compressive strength and/or bending strength and/or elastic modulus can be varied independently. In particular, concrete materials are provided which have a higher bending strength than conventional concrete, compared for the same compressive strength.

Elastic modulus (or Young's modulus, E) is the ratio of the tensile stress, applied to a body, to the tensile strain in the body as a result of the stress. Elastic modulus describes tensile elasticity and can be expressed in $N/m^2$, or in $lb/in^2$, (psi). For conventional concrete, the elastic modulus $E_c$ can be calculated using the following empirical equation:

$$E_c = w_c^{1.5} 33\sqrt{f'_c}$$

where

$\omega_c$ is the weight of concrete in pounds per cubic foot ($lb/ft^3$) and where $90\dfrac{\mathrm{lb}}{\mathrm{ft^3}} \leq w_c \leq 160\dfrac{\mathrm{lb}}{\mathrm{ft^3}}$,

$f'_c$ is the compressive strength of concrete at 28 days in psi. For normal weight concrete, which is defined as concrete with a $\omega_c$ of 150 pcf, $E_c$ is permitted to be taken as $57000\sqrt{f'_c}$. This represents the relation of compressive strength and elastic modulus for conventional concrete.

If these properties were independently variable or had a different relation, this would lead to superior mechanical properties such as high compressive strength and high bending strength in combination with high elasticity, high tensile strength being 20-80% of compressive strength, limited crack formation and also to a reduced amount of the cement needed (up to 20-50% less). These properties give the concrete materials, e.g. shock resistance and resistance to extreme cold.

In the non-prepublished EP-A-2 113 494 an additive mixture is described containing three zeolites, zeolite-1, zeolite-2 and zeolite-3. These zeolites are also used in the present invention and described in detail hereinbelow. This additive mixture is in EP-A-2 113 494 made to prepare a concrete material wherein said zeolites are combined in a volume ratio of 1 : 0.8-1.2 : 0.8-1.2, respectively; the concrete further comprising aggregates, waste and cement. Said concrete material is used to make power blocks, kerbsides and kerbstones.

The present invention relates to a new material comprising aggregate, preferably comprising waste material, and a cement additive which allows immobilisation of the waste material and its contaminants and gives the end product favourable construction material properties

In a first embodiment, the present invention relates to the use of a concrete material comprising aggregates, cement and a cement additive, cement additive comprising a mixture of three zeolites in an amount of 0.5 to 5 wt.% of the total weight of cement with cement additive, wherein

a first zeolite Zeolite-(1) has a dry-solids content of 88-92 wt.%, and comprises on a dry basis 20-30 wt.% $Na_2O$, 30-40 wt.% $Al_2O_3$ and 35-45 wt.% $SiO_2$, said first zeolite having a bulk density in the range of 400-600 g/l; having a calcium-binding capacity of at least 130 mg CaO/g on a 100% basis for anhydrous zeolite; having a pH above 9; and containing $\leq$50 ppm water soluble Fe; $\leq$ 500 ppm total Fe; $\leq$ 1 ppm water soluble Ni; $\leq$ 2 ppm water-soluble Cr; and $\leq$ 7 ppm water-soluble Ti;

a second zeolite Zeolite-(2) has a dry-solids content of 78-82 wt.%, and comprises on a dry basis 20-30 wt.% $Na_2O$, 30-40 wt.% $Al_2O_3$ and 35-45 wt.% $SiO_2$; said second zeolite having a bulk density of 400-600 g/l; having a pH in the range of 10-12; having an average particle size of 0.7-2.4 $\mu$m; and containing less than 50 ppm Fe and less than 5 ppm Ti; and

a third zeolite Zeolite-(3) has a dry-solids content of 68-82 wt.% and comprises on a dry basis 19-27 wt.% $Na_2O$, 33-42 wt.% $Al_2O_3$ and 38-44 wt.% $SiO_2$, said third zeolite having a tapped density of 300-600 g/l and having a pH above 10; and said zeolites are combined in a volume ratio of Zeolite-(1):Zeolite-(2):Zeolite-(3) of 1 : 0.8-1.2 : 0.8-1.2, wherein said concrete material has a bending strength higher than in the corresponding concrete material without the cement additive, for making a prefab construction material, said prefab construction material not being a power block, a kerbside or a kerbstone.

The amount of the zeolites in the cement composition of the invention is generally 0.5-5 wt.%, preferably 1-2.5 wt.%, based on the weight of the cement additive composition. However, for certain applications also higher amounts of the zeolites can be used.

The three types of zeolites are preferably used in nearly equal quantities by volume. This particular mixture of different zeolites provides the composition of the invention with a capacity to be applied to a wide range of waste materials.

In a further aspect, the present invention is directed to a prefab construction material not being a power block, a kerbside or a kerbstone, comprising a concrete material comprising aggregates, cement and a cement additive, said cement additive comprising a mixture of three zeolites in an amount of 0.5 to 5 wt.% of the total weight of cement with cement additive, wherein

a first zeolite Zeolite-(1) has a dry-solids content of 88-92 wt.%, and comprises on a dry basis 20-30 wt.% $Na_2O$, 30-40 wt.% $Al_2O_3$ and 35-45 wt.% $SiO_2$, said first zeolite having a bulk density in the range of 400-600 g/l; having a calcium-binding capacity of at least 130 mg CaO/g on a 100% basis for anhydrous zeolite; having a pH above 9; and containing $\leq$50 ppm water soluble Fe; $\leq$ 500 ppm total Fe; $\leq$ 1 ppm water soluble Ni; $\leq$ 2 ppm water-soluble Cr; and $\leq$ 7 ppm water-soluble Ti;

a second zeolite Zeolite-(2) has a dry-solids content of 78-82 wt.%, and comprises on a dry basis 20-30 wt.% $Na_2O$, 30-40 wt.% $Al_2O_3$ and 35-45 wt.% $SiO_2$; said second zeolite having a bulk density of 400-600 g/l; having a pH in the range of 10-12; having an average particle size of 0.7-2.4 $\mu$m; and containing less than 50 ppm Fe and less than 5 ppm Ti; and.

a third zeolite Zeolite-(3) has a dry-solids content of 68-82 wt.% and comprises on a dry basis 19-27 wt.% $Na_2O$, 33-42 wt.% $Al_2O_3$ and 38-44 wt.% $SiO_2$, said third zeolite having a tapped density of 300-600 g/l and having a pH above 10, and said zeolites are combined in a volume ratio of Zeolite-(1):Zeolite-(2):Zeolite-(3) of 1 : 0.8-1.2 : 0.8-1.2, wherein said concrete material has a bending strength higher than in the corresponding concrete material without said cement additive.

Preferably, the concrete material used has a compressive strength in about the same order or higher than the concrete material without the cement additive. With "the concrete material without the cement additive" we mean in the present description and the claims a concrete material made from exactly the same ingredients in the same parts by weight, except for the specific cement additive.

Preferably, the concrete material used in the invention is characterised by a bending strength which is higher than that of a concrete material without the cement additive, compared for the same compressive strength. The bending strength is preferably 15%, more preferably 30%, most preferably 50% higher than that of the (conventional) concrete material, which does not comprise the cement additive.

An advantage of the present invention is that said concrete used can be manufactured while using aggregates comprising waste materials. Various waste materials can be used, such as waste solids obtained during industrial processes, mining industry, construction and demolition, urban solid waste, contaminated soils, *etc.* In this way, waste can be re-utilised while primary raw materials such as pure sand and grit can be spared. This is economically lucrative as raw materials are (far) more expensive than waste materials. In addition, this contributes to a cleaner environment because the waste would otherwise end up on dumping sites or in waste combustion systems. Using waste in manufacturing of concrete allows reusing it infinitely.

In the present description and the appending claims, "waste material" is a broad concept (unless otherwise indicated) including all kinds of residual and waste materials from, e.g., the heavy industries, harbours, rivers, project developments, asphalt and concrete rubbish, infrastructural works, inclusive railway infrastructural works and scrap and demolitions sites and others.

A further advantage of the invention is a reduced amount of cement needed to make the concrete according to the invention. The total amount of cement materials (such as Portland cement, blast-furnace cement, pozzolan) defines the strength, amount of water needed, shrinkage, crack formation and density of the final material. The concrete according to the invention may have water/cement ratio of more than 0.5 and upto 2-3 or more, which is not possible with conventional concrete without strength loss or increased crack formation. Another benefit is that reducing amount of cement in the construction material results in a reduction of $CO_2$ emission associated with the production of cement.

The aggregates to be used in the concrete of the invention can contain as basis sand, slurry, grit and/or other material. Preferably, aggregates comprise waste materials. The aggregates may also be polluted with pollutants that are (potentially) hazardous to the environment and humans if present in unbound state, for example, heavy metals and their compounds, mineral oils, polycyclic aromatic hydrocarbons (PAH), *etc.*

The concrete material is obtainable by combining aggregates, cement and a cement additive with water, followed by curing. Preferably, this concrete material is characterised by a tensile strength which is 20-80% of its compressive strength.

Waste materials to be used according to the invention are, for instance, those from the European list of waste products (Eural). In particular, waste with the following main codes are of special interest for the invention: 01 (wastes resulting from exploration, mining, quarrying, physical and chemical treatment of minerals), 10 (waste from thermal processes), 17 (construction and demolition wastes (including excavated soil from contaminated sites)), 19 (wastes from waste management facilities, off-site waste water treatment plants and the preparation of water intended for human consumption and water for industrial use) and 20 (municipal wastes (household waste and similar commercial, industrial and institutional wastes) including separately collected fractions). The Eural codes come from the list of waste materials conform Art. 1 sub (a) of the Guideline 75/442/EEG on waste materials and Art. 1.4 of the Guidelines 91/689/EEG on dangerous waste materials.

Examples of suitable waste materials, which can be used in the present invention, are soils, including contaminated soil, such as heavy metal contaminated soil, ashes, sieve sand, construction waste, calcium carbide, cupola furnace dust, harbour sludge, lead slag, barites sludge, railway ballast, jet grit, iron slag, glass beads, AVI slags, grit of different sizes, fly ash, clay, stony mixture, PPS, jet dust, crushed asphalt, rubbish, silicon residue, furan, ATM sand, etc.

In a preferred embodiment, the waste materials used are blaster grit (Eural code 12.01.17), railway gravel and lumber (Eural code 17.05.08) and/or sieve sand (Eural code 19.12.12 and 19.12.09), or a combination thereof, wherein blaster grit, railway gravel and lumber and sieve sand can be present in amounts of 5-90 vol.% drawn to the final composition, preferably between 10 and 80 vol.%. In a preferred embodiment, the weight ratio of sieve sand to other components not being cement composition is from 15/85 to 75/25. The blaster grit is preferably present in an amount between 5 and 50 vol.%, more preferably between 10 and 35 vol.%. The railway gravel and lumber most preferably is present in amounts between 40 and 60 vol.%.

Sieve sand originates from activities as sorting and/or breaking of demolition waste. In a breaking process the first step is a sieve step, to remove the fines. Next, the coarse material is broken and upgraded to a secondary raw material, which can be used as a coarse aggregate in concrete, or as a road construction material. The fine material (sieve sand) cannot be applied without due consideration. The sieve sand may be contaminated with all kinds of contaminations, including organic contaminations such as polycyclic aromatic hydrocarbons (PAHs) to such an extent that, according to the Dutch Building Materials Decree, the sieve sand is not applicable as a granular building material. In the Dutch Building Materials Decree the organic contaminants are assessed on the basis of total concentration, in mg/kg (dry solids). However, from an environmental point of view, not so much is the total concentration, but mainly the amount of leaching is relevant. For this reason, the impact on the environment of the application of stabilised sieve sand is assessed in terms of mg cations and anions leached per square meter surface area. The composition of the present invention results in the fact that, based on leaching tests, even highly contaminated sieve sand (e.g. containing up to 1,000 mg/kg PAHs) can be sufficiently stabilised or immobilised. Simultaneously, waste material having high amounts of organic contaminants can be effectively stabilised and immobilised to pass relevant tests and governmental requirements.

The waste materials may vary in their physical characteristics, and in particular, in the particle size. For example, sludge originated from water treatment plants is for 60% composed of fine particles of average particle size of 63 $\mu$m. Slag waste from metallurgy ranges in particle size from 20 to 60 mm, thus it is similar to sand and grit of conventional concrete. Waste can also be a mix, such as sieve sand comprising sand contaminated with wood, plastics, steel, synthetic materials, etc.

Generally, no special pre-treatment is needed for the waste materials to be used according to the invention. If desired though, the waste material can be sieved to a particular size. In some applications it may be desired to dry the waste material prior to the use to remove the adsorbed water.

The amount of hazardous compounds present in the waste to be used in the concrete according to the invention is not limited by the encapsulation ability of the cement additive, but rather by the maximum concentrations of specific pollutants allowed by governmental requirements to be present in construction materials.

The cement to be used in the present invention can be selected from all known cements. Preferably, the invention uses Portland cement and/or blast-furnace or high-oven cement; suitable cements are identified by the following identifications CEM I 32,5 R, CEM I 42,5 R, CEM I 52,5 R, CEM II/B-V 32,5 R, CEM III/A 32,5 N, CEM III/A 42,5 N, CEM III/A 52,5 N, CEM III/B 32,5 N and CEM III/B 42,5 N *etc.* In the composition of the invention, the cement is used in an amount of 80-500, preferably 90-300 and most preferably 100-200 kg/m$^3$ final product; the remainder being waste material and/or conventional fillers like sand and pebbles and so on.

The cement additive used in the invention is described in detail in the above cited EP-A- 2 113 494. The cement additive comprises a mixture of three different types of zeolites. These zeolites are based on sodium, aluminium and silicon oxides.

The first zeolite, herein-after referred to as Zeolite-(1), has a dry solids content of 88-92 wt.% (under ambient conditions and especially at 25°C, 1 atm, relative humidity 80%), and comprises - on a dry basis, i.e. anhydrous (without water of crystallization) - 20-30 wt.%, preferably 22-27, more preferably 23.5-25.5 wt.% $Na_2O$; 30-40 wt.%, preferably 32-37, more preferably 33.5-36.5 wt.% $Al_2O_3$; and 35-45 wt.%, preferably 37-44, more preferably 39-43 wt.% $SiO_2$, said Zeolite-(1) having a bulk density in the range of 400-600 g/l and a tapped density (determined after 1250 taps; the method to determine tapped density, for instance, being described by Dubrow and Rieradka in Technical Reports Nos. PA-TR-2092; AD-47231 of Picatinny Arsenal, Samuel Feltman Ammunition Labs. Dover N.J. (Nov. 1, 1954; OSTI ID: 4388372)) of at least 400 g/l; having a calcium-binding capacity of at least 130 mg, preferably at least 150 mg CaO/g on a 100% basis (anhydrous zeolite) (determined as described in EP-A-0 384 070); having a pH above 9, and preferably of about 10; having an ignition loss (1 hour; 800 °C) of 15-30 %; and containing ≤50 ppm water soluble Fe; ≤ 500 ppm total Fe; ≤ 1 ppm water soluble Ni; ≤ 2 ppm water-soluble Cr; and ≤ 7 ppm water-soluble Ti. In a preferred embodiment, Zeolite-(1) has an average particle size (determined by sedimentation analysis using a SediGraph 5100 marketed by Micromeritics) of 1.2-2.2 $\mu$m. The pH is determined in a 5% aqueous suspension at room temperature (25°C) using a conventional pH meter, which pH determination is used for all pH-values referred to in the present description and claims. In a preferred embodiment, Zeolite-(1) is a P-type zeolite.

The second zeolite, herein-after Zeolite-(2), is a small particle size zeolite and has a dry-solids content of 78-82 wt.%, and comprises - on a dry basis, i.e. anhydrous (without water of crystallization) - 20-30 wt.%, preferably 22-27, more preferably 23.5-25.5 wt.% $Na_2O$; 30-40 wt.%, preferably 32-37, more preferably 33.5-36.5 wt.% $Al_2O_3$ ; and 35-45 wt.%, preferably 37-44, more preferably 39-43 wt.% $SiO_2$; has a pH in the range of 10-12 and preferably in the range of 11-12; has an average particle size (determined by sedimentation analysis using a SediGraph 5100 marketed by Micromeritics) of 0.7-2.4, and preferably from 0.9-1.5 $\mu$m; has a bulk density of 400-600 g/l; and contains less than 50 ppm iron and less than 5 ppm Ti. In a preferred embodiment, Zeolite-(2) is also a, be it a different, P-type zeolite.

The third zeolite, herein-after Zeolite-(3) has a dry-solids content of 68-82 wt.% and comprises - on a dry basis , i.e. anhydrous (without water of crystallization) - 19-27 wt.%, preferably 20-26, more preferably 21-24 wt.% $Na_2O$; 33-42 wt.%, preferably 34-40, more preferably 35-38 wt.% $Al_2O_3$ and 38-44 wt.%, preferably 39-42, more preferably 40-42 wt.% $SiO_2$, said zeolite having a tapped density of 300-600 g/l; having a pH above 10, and having an ignition loss of 16-24%.

The described zeolite types are commercially available, e.g., from W.R. Grace or Davisson.

The three different zeolites are combined in a volume ratio of Zeolite-(1):Zeolite-(2):Zeolite-(3) of 1 : 0.8-1.2 : 0.8-1.2, and preferably about 1 : 1 : 1.

A first role of the cement additives to be used in the invention is to improve the binding capacity of the cement in order to effectively encapsulate the waste material and, thus, immobilise (potentially) hazardous components present in it. In this way the pollutants contained in the waste material will not or hardly (that is, below acceptable and allowable limits) leach out or otherwise escape from the composition. The pollutants are immobilised in such a way that the final product meets the requirements and governmental norms to use it as a construction material.

In a second role, the cement additive allows it to incorporate the waste material in the concrete such that the improved mechanical properties are obtained.

Without wishing to be bound to any theory, it is believed that the waste materials when used in the composition of the invention become chemically bound after applying the combination of the zeolite mixture, cement and water. This covalent bonding is additional and/or different from the bonding present in conventional concrete. Such additional covalent bonding, on one hand, provides an extended silicate network which deactivates potentially hazardous materials, e.g., by entrapment, and prevents their leaching out. In addition, zeolites are also capable of effective encapsulation of metal ions, such as for example heavy metal ions. On the other hand, as was mentioned before, the additional chemical bonding contributes to the superior mechanical properties of the concrete of the invention, such as high compressive strength and high bending strength as well as the elastic modulus that may be varied independently from these.

Also other additives known in the art for immobilising pollutants in materials can be used. Dependent on the composition of the waste material to be immobilised, the additive according to the invention may contain, for example, sodium carbonate, generally in amounts between 0.1-5 wt.% drawn on the final composition; organic bases like CaO; sodium salts of fumed silica, or of micro silica, magnesium compounds and other calcium compounds.

Sodium carbonate is a sodium salt of carbonic acid and generally is a crystalline hepta-hydrate with an alkaline character. It induces the stabilisation of pH of the mixture; its main role is to influence the redox potential and pH during the formation of concrete. In addition, it also acts as a wetting agent and thus influences the water percentage in the mixture for getting a good quality concrete.

Cement production requires a source of calcium and a source of silicon. CaO present in the concrete provides for additional ionic requirements needed for achieving strength and other desirable properties of the concrete.

Silica fume is a by-product of producing silicon metal or ferrosilicon based on alloys. One of the most beneficial uses for silica fume in concrete is based on its chemical and physical properties; it is a very reactive pozzolan. Silica fume consists primarily of amorphous (non-crystalline) silicon dioxide ($SiO_2$). The individual particles are extremely small, approximately 1/100th the size of an average cement particle. Because of its fine particles, large surface area, and the high $SiO_2$ content, silica fume is a very reactive pozzolan when used in concrete. Concrete containing silica fume induces a high strength and has an effect on concrete durability and avoids erosion. Silica fume (or Micro Silica) is added according to the overall chemical requirements of the mixture. Adding, finishing, and curing silica-fume concrete is carried out as required from point of view of hardening process.

Suitable amounts of water for preparing the concrete composition can easily be determined by a person skilled in the art; generally suitable amounts vary between 4 and 22 vol.%, preferably between 5 and 20 vol.%. Preferably, the mortar-like mixture prepared is compacted, pressed, vibrated, rolled or otherwise processed into a desired form. The quantities of water used in the production of the type of concrete of the present invention may greatly differ from the quantities of water used in the production of conventional concrete.

Water to be used according to the invention can be purified or contaminated water which may originate from the processes described in the Eural list, such as waste water from water treatment plants and industrial processes.

Alternatively or in addition to the waste materials, the concrete composition can contain various fillers. As fillers can be used high amounts of sand, or alternatively and in addition, clay, loam, mud, peat, (sewer) sludge, refuse incineration slags, soil and fly ashes, and coarse materials such as gravel, pieces of asphalt, pieces of stone rubbish, as well as other solid waste.

The new concrete material according to the invention can also be utilised for example for specified lower value construction applications such as fill and base for roads, railroads, buildings, parking lots, pavements, streets, and pipe and drain ducts.

The concrete of the invention can advantageously be used in prefab construction materials, for example, in paving stones. Such prefab construction materials can, according to the invention, comprise 10-40 vol.% of glass drawn to the final composition, including 5-25 vol.% of coarse glass, the balance being fine glass (up to 3 mm in largest diameter), 5-25 vol.% of lead slag, 5-25 vol.% of iron slag and/or 5-30 vol.% of jet grit. Preferably, these prefab construction materials further comprise from 100 to 300 kg/m$^3$ final product of cement, from 250 to 50 kg/m$^3$ of fly ashes and/or from 5 to 25 kg/m$^3$ final product of the cement additive.

The new concrete is resistant to heat, cold, earthquakes, aggressive chemicals in industrial applications. It also possesses low moisture permeability which makes it suitable for use in frost areas. The concrete material of the invention can also be used in solar concrete collectors for heat conduction.

Another advantage of the composition of the invention is that it has advantageous properties which are required for a good quality concrete. Materials are created with a high hardness and/or high compressive strength, for instance with compressive strengths in the range of 1.5-70, and preferably 5-50 N/mm$^2$. In addition, materials are created having a high elasticity modulus of for instance 500-30,000, and preferably 10,000-20,000 N/mm$^2$ and high bending and tensile strengths in the order of about 0.5-9, and preferably 2-5 N/mm$^2$.

Especially because of the properties associated with the compressive strength and the bending strength, the composition according to the invention has important advantages over conventional cement bound material that breaks down without reinforcement materials when subjected to situations involving high compressive and/or bending strengths.

The invention will now be described in further detail while referring to the following, non-limiting examples. Percentages are percentages by weight drawn to the total composition, unless otherwise indicated.

Example 1. Conventional concrete.

For conventional concrete, the mechanical characteristics such as compressive strength CS, bending strength BS and elastic modulus E, are related to each other, *i.e.* the higher the compressive strength, the higher the bending strength and elastic modulus of the concrete.

Table 1 shows these characteristics for different strength classes of conventional concrete determined according to Dutch standard procedures for concrete characterization NEN 6720 and CUR-Aanbeveling 97 for high strength concrete. All values are given in MPa (1MPa = 1N/mm$^2$). The strength notation of C12/15 refers to a concrete grade with characteristic cylinder and cube strength of 12 N/mm$^2$ and 15 N/mm$^2$, respectively.

Table 1.

| Dutch norm | Strength class | CS | BS | E |
|---|---|---|---|---|
| NEN 6720 | C12/15 | 15 | 1.8 | 26000 |
| | C20/25 | 25 | 2.3 | 28500 |
| | C28/35 | 35 | 2.8 | 31000 |
| | C35/45 | 45 | 3.3 | 33500 |
| | C45/55 | 55 | 3.8 | 36000 |
| | C53/65 | 65 | 4.3 | 38500 |
| CUR-Aanbeveling 97 | C60/75 | 75 | 4.5 | 38900 |
| | C70/85 | 85 | 4.7 | 39200 |
| | C80/95 | 95 | 4.9 | 39700 |
| | C90/105 | 105 | 5.1 | 40100 |

Example 2. Concrete of the invention.

Depending on the type and amount of waste materials, cement and additives used, concrete of the invention belongs to strength classes from M5 to M50 (and higher) (internal classification system of Applicant). This corresponds to classes C5 to C50 of conventional concrete. Table 2 shows the comparison of the bending strength and elastic modulus for conventional concrete and concrete according to the invention. All values are given in MPa.

Table 2.

| Strength class | CS, invention | BS, invention | BS, conventional concrete | E, invention | E, conventional concrete |
|---|---|---|---|---|---|
| M5 | 2-7 | 0.4-1.5 | | 400-6000 | |
| M10 | 7-12 | 0.6-3.0 | | 600-9000 | |
| M15 | 12-17 | 0.9-3.5 | 1.8 | 1000-10000 | 26000 |
| M20 | 17-22 | 1.2-4.0 | | 2000-12000 | |
| M25 | 22-27 | 1.5-4.8 | 2.8 | 3000-15000 | 28500 |
| M30 | 27-32 | | | 3500-17000 | |
| M35 | 32-37 | 1.8-5.2 | 3.3 | 4200-18000 | 31000 |
| M40 | 37-42 | | | 5500-20000 | |
| M45 | 42-47 | 2.5-6.5 | 3.8 | 6500-22000 | 33500 |
| M50 | 47-52 | | | 6600-24500 | |

Table 2 shows that for the concrete of the invention, the bending strength can be varied in a broad range in comparison with the bending strength of conventional concrete.

Example 3.

Table 3 shows the amounts of cement necessary for the composition of the invention and for conventional concrete in relation to the concrete strength class.

Table 3

| Concrete of invention | Conventional concrete | Cement (invention), kg/m$^3$ | Cement (conventional), kg/m$^3$ |
|---|---|---|---|
| M5 | | 60-90 | |
| M10 | | 70-160 | |
| M15 | C12/15 | 100-200 | 225 |
| M20 | | 125-225 | |
| M25 | C20/25 | 150-250 | 300 |
| M30 | | 175-275 | |
| M35 | C28/35 | 200-315 | 350 |
| M40 | | 200-300 | |
| M45 | C35/45 | 200-300 | 400 |
| M50 | | 200-325 | |

The Table shows that the amount of cement for making concrete according to the invention is from 20 to 50% lower than for the conventional concrete of the same strength class.

Examples 4 and 5.

In a suitable reservoir, cement (CEM III (*ex* ENCI, the Netherlands)) containing the cement additive according to the invention, or (for comparison) a cement (the same CEM III) not containing said cement additive, was combined with Lahar sand as a waste material. A suitable amount of water was added, and the material was added to cylindrical moulds having an internal diameter of 10 cm and a height of 12 cm. After curing, the moulds were removed and the compressive strength (CS, in N/mm$^2$; average of three measurements) was determined after drying after 7, 14, 28, 56 and 90 days.

The compressive strength was determined according to the NEN 6720 Dutch standard procedures. The results without the cement additive are shown in Table 4.

Table 4. Without the cement additive.

| Cylinder number | Curing (days) | Weight (g) | Density (kg/m$^3$) | CS (N/mm$^2$) |
|---|---|---|---|---|
| M - G 1L | 7 | 2045 | 2152 | |
| M - G 1L | 7 | 2048 | 2113 | 6.5 |
| M - G 1L | 7 | 2008 | 2113 | |
| M - G 1L | 14 | 2066 | 2131 | |
| M - G 1L | 14 | 2055 | 2162 | 9.0 |
| M - G 1L | 14 | 2022 | 2128 | |
| M - G 1L | 28 | 2040 | 2165 | |
| M - G 1L | 28 | 2059 | 2142 | 10.4 |
| M - G 1L | 28 | 2048 | 2173 | |
| M - G 1L | 56 | 2055 | 2145 | |
| M - G 1L | 56 | 2055 | 2162 | 11.7 |
| M - G 1L | 56 | 2037 | 2119 | |
| M - G 1L | 90 | 2057 | 2165 | |
| M - G 1L | 90 | 2044 | 2151 | 11.9 |

The same cylinder samples with the same dimensions were prepared using 1 wt.% of the cement additive. The results are shown in Table 5.

Table 5. With 1 wt.% of the cement additive.

| Cylinder number | Curing (days) | Weight (g) | Density (kg/m$^3$) | CS (N/mm$^2$) |
|---|---|---|---|---|
| M - G 1I | 7 | 2081 | 2190 | |
| M - G 1I | 7 | 2099 | 2183 | 15.6 |
| M - G 1I | 7 | 2123 | 2208 | |
| M - G 1I | 14 | 2101 | 2167 | |
| M - G 1I | 14 | 2114 | 2181 | 17.4 |
| M - G 1I | 14 | 2099 | 2183 | |
| M - G 1I | 28 | 2068 | 2169 | |
| M - G 1I | 28 | 2109 | 2175 | 19.0 |
| M - G 1I | 28 | 2075 | 2140 | |
| M - G 1I | 56 | 2106 | 2209 | |
| M - G 1I | 56 | 2087 | 2171 | 20.6 |
| M - G 1I | 56 | 2099 | 2165 | |
| M - G 1I | 90 | 2121 | 2206 | |
| M - G 1I | 90 | 2089 | 2173 | 21.3 |
| M - G 1I | 90 | 2116 | 2201 | |

Table 4 and 5 show that the compressive strength CS of the concrete material with the cement additive is on average 45% higher than of the concrete material without the cement additive.

Example 6.

In this example concrete prisms of 160 cm (length) x 40 cm (height) x 40 cm (width) were prepared. The waste material used comprised a mixture of coarse inert materials, glass beads (white broken), glass beads (green/brown), mixed granulate, jet grit. The amount of the cement additive was varied from 0.5 to 2.5 wt.% based on the weight of the cement composition. The cement used is CEM I 52,5R (ENCI) in an amount of 300 kg per 1m$^3$ final product. Additionally, the composition comprised several conventional additives. An alkali additive was applied to control the redox potential of the mixture and to provide a pH of slightly higher than 7. Microsilica was used as an additional filler and a melamine-carboxylate additive served to control the viscosity and water content of the mixture.

Bending strength (BS) and compressive strength (CS) of prismatic specimens of concrete compositions according to the invention were measured after 7 and 28 days of curing. BS and CS were determined according to the NEN Dutch standard procedures.

Table 6

| Sample | Cem. add. wt.%* | W/C ratio** | Curing (days) | Weight (g) | Density (kg/m$^3$) | BS (N/mm$^2$) | CS (N/mm$^2$) |
|---|---|---|---|---|---|---|---|
| Plaat B | 2.5 | 0.5 | | | | | |
| | | | 7 | 592 | 2312 | 6.04752 | 59.56 |
| | | | 28 | 586 | 2233 | 8.57904 | 72.64 |
| Plaat C | 2.0 | 0.5 | | | | | |
| | | | 7 | 574 | 2187 | 6.79760 | 54.46 |
| | | | 28 | 587 | 2237 | 7.31328 | |
| Plaat D | 2.0 | 0.8 | | | | | |
| | | | 28 | 595 | 2267 | 7.26640 | 65.64 |
| Plaat E | 1.5 | 0.5 | | | | | |
| | | | 7 | 566 | 2210 | 4.12544 | 39.88 |
| | | | 28 | 573 | 2238 | 5.95376 | 49.92 |
| Plaat F | 1.0 | 0.5 | | | | | |
| | | | 7 | 564 | 2149 | 4.50048 | 28.08 |
| | | | 29 | 560 | 2134 | 5.78968 | 43.7 |
| Plaat I-2 | 0.5 | 0.5 | | | | | |
| | | | 7 | 504 | 1968 | 3.46912 | 18.88 |
| | | | 28 | 495 | 1933 | 4.38328 | 25.8 |
| * - cement additive, ** W/C - water/cement ratio | | | | | | | |

This table shows that the bending strength (BS) of the concrete material of the invention is higher than the bending strength of the conventional concrete (Table 2). The table also demonstrates that higher amounts of the cement additive lead to higher bending strength and compressive strength.

**Claims**

1. Use of a concrete material comprising aggregates, cement and a cement additive, said cement additive comprising a mixture of three zeolites in an amount of 0.5 to 5 wt.% of the total weight of cement with cement additive, wherein a first zeolite Zeolite-(1) has a dry-solids content of 88-92 wt.%, and comprises on a dry basis 20-30 wt.% Na$_2$O, 30-40 wt.% Al$_2$O$_3$ and 35-45 wt.% SiO$_2$, said first zeolite having a bulk density in the range of 400-600 g/l; having a calcium-binding capacity of at least 130 mg CaO/g on a 100% basis for anhydrous zeolite; having a pH above 9; and containing ≤50 ppm water soluble Fe; ≤ 500 ppm total Fe; ≤ 1 ppm water soluble Ni; ≤ 2 ppm water-soluble Cr; and ≤ 7 ppm water-soluble Ti,

a second zeolite Zeolite-(2) has a dry-solids content of 78-82 wt.%, and comprises on a dry basis 20-30 wt.% $Na_2O$, 30-40 wt.% $Al_2O_3$ and 35-45 wt.% $SiO_2$; said second zeolite having a bulk density of 400-600 g/l; having a pH in the range of 10-12; having an average particle size of 0.7-2.4 $\mu$m; and containing less than 50 ppm Fe and less than 5 ppm Ti; and

a third zeolite Zeolite-(3) has a dry-solids content of 68-82 wt.% and comprises on a dry basis 19-27 wt.% $Na_2O$, 33-42 wt.% $Al_2O_3$ and 38-44 wt.% $SiO_2$, said third zeolite having a tapped density of 300-600 g/l and having a pH above 10;

and said zeolites are combined in a volume ratio of Zeolite-(1):Zeolite-(2):Zeolite-(3) of 1 : 0.8-1.2 : 0.8-1.2, wherein said concrete material has a bending strength higher than in the corresponding concrete material without the cement additive, for making a prefab construction material, said prefab construction material not being a power block, a kerbside or a kerbstone.

2. The use according to claim 1, wherein the aggregates comprise waste material chosen from materials from the classes identified by Eural codes 01, 10, 17, 19 and 20, or a combination thereof.

3. The use according to claim 1 to 2, wherein the aggregates comprise sand, soil, stones, spoil, slag or a combination thereof.

4. The use according to claim 2, wherein the waste material is blaster grit, railway gravel and lumber and/or sieve sand.

5. The use according to any preceding claim, wherein the bending strength is 15%, preferably 30%, more preferably 50% higher than the bending strength of the concrete material without the cement additive.

6. The use according to any one of claims 1 - 5, having a water/cement ratio of more than 0.5, preferably more than 2; more preferably more than 3.

7. The use according to any one of claims 1 - 6, having a compressive strength in the range of 1.5 - 70, preferably 5-50 N/mm$^2$.

8. The use according to any one of claims 1 - 7, having an elasticity modulus of 500 - 30,000, preferably of 10,000 - 20,000 N/mm$^2$.

9. The use according to any one of claims 1 - 8, having a bending strength and/or tensile strength in the range of 0.5 - 9, preferably of 2 - 5 N/mm$^2$.

10. A prefab construction material not being a power block, a kerbside or a kerbstone, comprising a concrete material comprising aggregates, cement and a cement additive, said cement additive comprising a mixture of three zeolites in an amount of 0.5 to 5 wt.% of the total weight of cement with cement additive, wherein

a first zeolite Zeolite-(1) has a dry-solids content of 88-92 wt.%, and comprises on a dry basis 20-30 wt.% $Na_2O$, 30-40 wt.% $Al_2O_3$ and 35-45 wt.% $SiO_2$, said first zeolite having a bulk density in the range of 400-600 g/l; having a calcium-binding capacity of at least 130 mg CaO/g on a 100% basis for anhydrous zeolite; having a pH above 9; and containing $\leq$50 ppm water soluble Fe; $\leq$ 500 ppm total Fe; $\leq$ 1 ppm water soluble Ni; $\leq$ 2 ppm water-soluble Cr; and $\leq$ 7 ppm water-soluble Ti,

a second zeolite Zeolite-(2) has a dry-solids content of 78-82 wt.%, and comprises on a dry basis 20-30 wt.% $Na_2O$, 30-40 wt.% $Al_2O_3$ and 35-45 wt.% $SiO_2$; said second zeolite having a bulk density of 400-600 g/l; having a pH in the range of 10-12; having an average particle size of 0.7-2.4 $\mu$m; and containing less than 50 ppm Fe and less than 5 ppm Ti; and

a third zeolite Zeolite-(3) has a dry-solids content of 68-82 wt.% and comprises on a dry basis 19-27 wt.% $Na_2O$, 33-42 wt.% $Al_2O_3$ and 38-44 wt.% $SiO_2$, said third zeolite having a tapped density of 300-600 g/l and having a pH above 10;

and said zeolites are combined in a volume ratio of Zeolite-(1):Zeolite-(2):Zeolite-(3) of 1 : 0.8-1.2 : 0.8-1.2, wherein said concrete material has a bending strength higher than in the corresponding concrete material without the cement additive.

11. The prefab construction material according to claim 10, wherein said material is paving stones.

12. The prefab construction material according to claim 10 or 11, wherein the aggregates comprise waste material chosen from materials from the classes identified by Eural codes 01, 10, 17, 19 and 20, or a combination thereof.

13. The prefab construction material according to any one of claims 10 to 12, wherein the aggregates comprise sand, soil, stones, spoil, slag or a combination thereof.

14. The prefab construction material according to claim 12, wherein the waste material is blaster grit, railway gravel and lumber and/or sieve sand.

15. The prefab construction material according to any one of claims 10-14, wherein the bending strength is 15%, preferably 30%, more preferably 50% higher than the bending strength of the concrete material without the cement additive.

16. The prefab construction material according to any one of claims 10-15, having a water/cement ratio of more than 0.5, preferably more than 2; more preferably more than 3.

17. The prefab construction material according to any one of claims 10-16, having a compressive strength in the range of 1.5 - 70, preferably 5-50 N/mm$^2$.

18. The prefab construction material according to any one of claims 10-17, having an elasticity modulus of 500 - 30,000, preferably of 10,000 - 20,000 N/mm$^2$.

19. The prefab construction material according to any one of claims 10-18, having a bending strength and/or tensile strength in the range of 0.5 - 9, preferably of 2 - 5 N/mm$^2$.

**Patentansprüche**

1. Verwendung eines Betonmaterials, umfassend Aggregate, Zement und ein Zementadditiv, wobei das Zementadditiv eine Mischung aus drei Zeolithen in einer Menge von 0,5 bis 5 Gewichtsprozent des Gesamtgewichts des Zements mit dem Zementadditiv enthält, wobei
ein erster Zeolith-(1) einen Trockenmassegehalt von 88-92 Gewichtsprozent aufweist und auf einer Trockenbasis 20-30 Gewichtsprozent Na$_2$O, 30-40 Gewichtsprozent Al$_2$O$_3$ und 35-45 Gewichtsprozent SiO$_2$ umfasst, wobei der erste Zeolith eine Rohdichte im Bereich von 400-600 g/l aufweist; eine Kalziumbindungskapazität von mindestens 130 mg CaO/g auf einer 100 %-Basis für anhydrischen Zeolith aufweist; einen pH über 9 aufweist; und $\leq$ 50 ppm wasserlösliches Fe; insgesamt $\leq$ 500 ppm Fe; $\leq$ 1 ppm wasserlösliches Ni; $\leq$ 2 ppm wasserlösliches Cr; und $\leq$ 7 ppm wasserlösliches Ti enthält;
ein zweiter Zeolith-(2) einen Trockenmassegehalt von 78-82 Gewichtsprozent aufweist und auf einer Trockenbasis 20-30 Gewichtsprozent Na$_2$O, 30-40 Gewichtsprozent Al$_2$O$_3$ und 35-45 Gewichtsprozent SiO$_2$ umfasst, wobei der zweite Zeolith eine Rohdichte im Bereich von 400-600 g/l aufweist; einen pH im Bereich von 10-12 aufweist; eine durchschnittliche Partikelgröße von 0,7-2,4 $\mu$m aufweist; und weniger als 50 ppm Fe und weniger als 5 ppm Ti enthält; und
ein dritter Zeolith-(3) einen Trockenmassegehalt von 68-82 Gewichtsprozent aufweist und auf einer Trockenbasis 19-27 Gewichtsprozent Na$_2$O, 33-42 Gewichtsprozent Al$_2$O$_3$ und 38-44 Gewichtsprozent SiO$_2$ umfasst, wobei der dritte Zeolith eine volumenbezogene Dichte von 300-600 g/l und einen pH über 10 aufweist;
und die Zeolithen in einem Volumenverhältnis von Zeolith-(1):Zeolith-(2):Zeolith-(3) von 1 : 0,8-1,2 : 0,8-1,2 kombiniert sind,
wobei das Betonmaterial eine höhere Biegefestigkeit als das entsprechende Betonmaterial ohne das Zementadditiv aufweist, zur Herstellung eines vorgefertigten Baumaterials, das kein Baustein, keine Bordsteinkante oder kein Bordstein ist.

2. Verwendung nach Anspruch 1, wobei die Aggregate Abfallmaterial umfassen, ausgewählt aus den Klassen, identifiziert durch Eural-Codes 01, 10, 17, 19 und 20 oder einer Kombination von diesen.

3. Verwendung nach Anspruch 1 bis 2, wobei die Aggregate Sand, Erde, Steine, Aushub, Schlacke oder eine Kombination von diesen umfassen.

4. Verwendung nach Anspruch 2, wobei das Abfallmaterial Sprengkies, Bahnschotter und Holz und/oder Siebsand ist.

5. Verwendung nach einem der vorhergehenden Ansprüche, wobei die Biegefestigkeit 15 %, vorzugsweise 30 %, noch bevorzugter 50 % höher ist als die Biegefestigkeit des Betonmaterials ohne das Zementadditiv.

6. Verwendung nach einem der Ansprüche 1-5, mit einem Wasser/Zement-Verhältnis von mehr als 0,5, vorzugsweise mehr als 2; noch bevorzugter mehr als 3.

7. Verwendung nach einem der Ansprüche 1-6, mit einer Druckfestigkeit im Bereich von 1,5-70, vorzugsweise 5-50 N/mm$^2$.

8. Verwendung nach einem der Ansprüche 1-7, mit einem Elastizitätsmodul von 500-30.000, vorzugsweise von 10.000-20.000 N/mm$^2$.

9. Verwendung nach einem der Ansprüche 1-8, mit einer Biegefestigkeit und/oder Zugfestigkeit im Bereich von 0,5-9, vorzugsweise von 2-5 N/mm$^2$.

10. Vorgefertigtes Baumaterial, das kein Baustein, keine Bordsteinkante oder kein Bordstein ist, umfassend ein Betonmaterial, umfassend Aggregate, Zement und ein Zementadditiv, wobei das Zementadditiv eine Mischung aus drei Zeolithen in einer Menge von 0,5 bis 5 Gewichtsprozent des Gesamtgewichts des Zements mit dem Zementadditiv enthält, wobei
ein erster Zeolith-(1) einen Trockenmassegehalt von 88-92 Gewichtsprozent aufweist und auf einer Trockenbasis 20-30 Gewichtsprozent Na$_2$O, 30-40 Gewichtsprozent Al$_2$O$_3$ und 35-45 Gewichtsprozent SiO$_2$ umfasst; wobei der erste Zeolith eine Rohdichte im Bereich von 400-600 g/l aufweist; eine Kalziumbindungskapazität von mindestens 130 mg CaO/g auf einer 100 %-Basis für anhydrischen Zeolith aufweist; einen pH über 9 aufweist; und $\leq$ 50 ppm wasserlösliches Fe; insgesamt $\leq$ 500 ppm Fe; $\leq$ 1 ppm wasserlösliches Ni; $\leq$ 2 ppm wasserlösliches Cr; und $\leq$ 7 ppm wasserlösliches Ti enthält;
ein zweiter Zeolith-(2) einen Trockenmassegehalt von 78-82 Gewichtsprozent aufweist und auf einer Trockenbasis 20-30 Gewichtsprozent Na$_2$O, 30-40 Gewichtsprozent Al$_2$O$_3$ und 35-45 Gewichtsprozent SiO$_2$ umfasst, wobei der zweite Zeolith eine Rohdichte im Bereich von 400-600 g/l aufweist; einen pH im Bereich von 10-12 aufweist; eine durchschnittliche Partikelgröße von 0,7-2,4 $\mu$m aufweist; und weniger als 50 ppm Fe und weniger als 5 ppm Ti enthält; und
ein dritter Zeolith-(3) einen Trockenmassegehalt von 68-82 Gewichtsprozent aufweist und auf einer Trockenbasis 19-27 Gewichtsprozent Na$_2$O, 33-42 Gewichtsprozent Al$_2$O$_3$ und 38-44 Gewichtsprozent SiO$_2$ umfasst, wobei der dritte Zeolith eine volumenbezogene Dichte von 300-600 g/l und einen pH über 10 aufweist;
und die Zeolithen in einem Volumenverhältnis von Zeolith-(1):Zeolith-(2):Zeolith-(3) von 1 : 0,8-1,2 : 0,8-1,2 kombiniert sind,
wobei das Betonmaterial eine höhere Biegefestigkeit als das entsprechende Betonmaterial ohne das Zementadditiv aufweist.

11. Vorgefertigtes Baumaterial nach Anspruch 10, wobei es sich bei dem Material um Pflastersteine handelt.

12. Vorgefertigtes Baumaterial nach Anspruch 10 oder 11, wobei die Aggregate Abfallmaterial umfassen, ausgewählt aus Materialien der Klassen, identifiziert durch Eural-Codes 01, 10, 17, 19 und 20, oder einer Kombination von diesen.

13. Vorgefertigtes Baumaterial nach einem der Ansprüche 10-12, wobei die Aggregate Sand, Erde, Steine, Aushub, Schlacke oder eine Kombination von diesen umfassen.

14. Vorgefertigtes Baumaterial nach Anspruch 12, wobei das Abfallmaterial Sprengkies, Bahnschotter und Holz und/oder Siebsand ist.

15. Vorgefertigtes Baumaterial nach einem der Ansprüche 10-14, wobei die Biegefestigkeit 15 %, vorzugsweise 30 %, noch bevorzugter 50 % höher ist als die Biegefestigkeit des Betonmaterials ohne das Zementadditiv

16. Vorgefertigtes Baumaterial nach einem der Ansprüche 10-15, mit einem Wasser/Zement-Verhältnis von mehr als 0,5, vorzugsweise mehr als 2; noch bevorzugter mehr als 3.

17. Vorgefertigtes Baumaterial nach einem der Ansprüche 10-16, mit einer Druckfestigkeit im Bereich von 1,5-70, vorzugsweise 5-50 N/mm$^2$.

18. Vorgefertigtes Baumaterial nach einem der Ansprüche 10-17, mit einem Elastizitätsmodul von 500-30.000, vorzugsweise von 10.000-20.000 N/mm$^2$.

**19.** Vorgefertigtes Baumaterial nach einem der Ansprüche 10-18, mit einer Biegefestigkeit und/oder Zugfestigkeit im Bereich von 0,5-9, vorzugsweise von 2-5 N/mm$^2$.

**Revendications**

**1.** Utilisation d'un matériau de béton comprenant des agrégats, du ciment et un additif pour ciment, ledit additif pour ciment comprenant un mélange de trois zéolites en une quantité de 0,5 à 5 % en poids du poids total du ciment avec l'additif pour ciment, dans laquelle

une première zéolite, Zéolite-(1), possède une teneur en matières sèches de 88 à 92 % en poids, et comprend, sur une base sèche, de 20 à 30 % en poids de Na$_2$O, de 30 à 40 % en poids d'Al$_2$O$_3$ et de 35 à 45 % en poids de SiO$_2$, ladite première zéolite possédant une masse volumique apparente comprise dans la plage allant de 400 à 600 g/l ; possédant une capacité de fixation de calcium d'au moins 130 mg de CaO/g sur une base de 100 % de zéolite anhydre ; possédant un pH supérieur à 9 ; et contenant $\leq$ 50 ppm de Fe soluble dans l'eau ; $\leq$ 500 ppm de Fe total ; $\leq$ 1 ppm de Ni soluble dans l'eau ; $\leq$ 2 ppm de Cr soluble dans l'eau ; et $\leq$ 7 ppm de Ti soluble dans l'eau ;

une deuxième zéolite, Zéolite-(2), possède une teneur en matières sèches de 78 à 82 % en poids, et comprend, sur une base sèche, de 20 à 30 % en poids de Na$_2$O, de 30 à 40 % en poids d'Al$_2$O$_3$ et de 35 à 45 % en poids de SiO$_2$ ; ladite deuxième zéolite possédant une masse volumique apparente de 400 à 600 g/l ; possédant un pH compris dans la plage allant de 10 à 12 ; possédant une granulométrie moyenne de 0,7 à 2,4 $\mu$m ; et contenant moins de 50 ppm de Fe et moins de 5 ppm de Ti ; et

une troisième zéolite, Zéolite-(3), possède une teneur en matières sèches de 68 à 82 % en poids et comprend, sur une base sèche, de 19 à 27 % en poids de Na$_2$O, de 33 à 42 % en poids d'Al$_2$O$_3$ et de 38 à 44 % en poids de SiO$_2$, ladite troisième zéolite possédant une masse volumique après tassement de 300 à 600 g/l et possédant un pH supérieur à 10 ;

et lesdites zéolites sont combinées selon un rapport en volume de Zéolite-(1):Zéolite-(2):Zéolite-(3) de 1:0,8 à 1,2: 0,8 à 1,2,

dans laquelle ledit matériau de béton possède une résistance à la flexion supérieure à celle du matériau de béton correspondant sans l'additif pour ciment, pour la préparation d'un matériau de construction préfabriqué, ledit matériau de construction préfabriqué n'étant pas un bloc de puissance, un linéaire de trottoir ou une bordure de trottoir.

**2.** Utilisation selon la revendication 1, dans laquelle l'agrégat comprend un matériau de rebut choisi parmi les matériaux des classes identifiées par les codes Eural 01, 10, 17, 19 et 20, ou une combinaison de ceux-ci.

**3.** Utilisation selon la revendication 1 ou 2, dans laquelle les agrégats comprennent le sable, la terre, les pierres, les déblais, le laitier ou une combinaison de ceux-ci.

**4.** Utilisation selon la revendication 2, dans laquelle le matériau de rebut est une grenaille, un gravier de chemin de fer et un bois de construction et/ou un sable tamisé.

**5.** Utilisation selon l'une quelconque des revendications précédentes, dans laquelle la résistance à la flexion est 15 %, de préférence 30 %, plus préférablement 50 % plus élevée que la résistance à la flexion du matériau de béton sans l'additif pour ciment.

**6.** Utilisation selon l'une quelconque des revendications 1 à 5, ayant un rapport eau/ciment supérieur à 0,5, de préférence supérieure à 2, plus préférablement supérieur à 3.

**7.** Utilisation selon l'une quelconque des revendications 1 à 6, possédant une résistance à la compression comprise dans la plage allant de 1,5 à 70, de préférence de 5 à 50 N/mm$^2$.

**8.** Utilisation selon l'une quelconque des revendications 1 à 7, possédant un module d'élasticité de 500 à 30 000, de préférence de 10 000 à 20 000 N/mm$^2$.

**9.** Utilisation selon l'une quelconque des revendications 1 à 8, possédant une résistance à la flexion et/ou une résistance à la traction comprise dans la plage allant de 0,5 à 9, de préférence de 2 à 5 N/mm$^2$.

**10.** Matériau de construction préfabriqué qui n'est pas un bloc de puissance, un linéaire de trottoir ou une bordure de trottoir, comprenant un matériau de béton comprenant des agrégats, du ciment et un additif pour ciment, ledit additif pour ciment comprenant un mélange de trois zéolites en une quantité de 0,5 à 5 % en poids du poids total du ciment avec l'additif pour ciment, dans lequel

une première zéolite, Zéolite-(1), possède une teneur en matières sèches de 88 à 92 % en poids, et comprend, sur une base sèche, de 20 à 30 % en poids de $Na_2O$, de 30 à 40 % en poids d'$Al_2O_3$ et de 35 à 45 % en poids de $SiO_2$, ladite première zéolite possédant une masse volumique apparente comprise dans la plage allant de 400 à 600 g/l ; possédant une capacité de fixation de calcium d'au moins 130 mg de CaO/g sur une base de 100 % de zéolite anhydre ; possédant un pH supérieur à 9 ; et contenant $\leq$ 50 ppm de Fe soluble dans l'eau ; $\leq$ 500 ppm de Fe total ; $\leq$ 1 ppm de Ni soluble dans l'eau ; $\leq$ 2 ppm de Cr soluble dans l'eau ; et $\leq$ 7 ppm de Ti soluble dans l'eau ;

une deuxième zéolite, Zéolite-(2), possède une teneur en matières sèches de 78 à 82 % en poids, et comprend, sur une base sèche, de 20 à 30 % en poids de $Na_2O$, de 30 à 40 % en poids d'$Al_2O_3$ et de 35 à 45 % en poids de $SiO_2$ ; ladite deuxième zéolite possédant une masse volumique apparente de 400 à 600 g/l ; possédant un pH compris dans la plage allant de 10 à 12 ; possédant une granulométrie moyenne de 0,7 à 2,4 $\mu$m ; et contenant moins de 50 ppm de Fe et moins de 5 ppm de Ti ; et

une troisième zéolite, Zéolite-(3), possède une teneur en matières sèches de 68 à 82 % en poids et comprend, sur une base sèche, de 19 à 27 % en poids de $Na_2O$, de 33 à 42 % en poids d'$Al_2O_3$ et de 38 à 44 % en poids de $SiO_2$, ladite troisième zéolite possédant une masse volumique après tassement de 300 à 600 g/l et possédant un pH supérieur à 10 ;

et lesdites zéolites sont combinées selon un rapport en volume de Zéolite-(1):Zéolite-(2):Zéolite-(3) de 1:0,8 à 1,2: 0,8 à 1,2,

dans lequel ledit matériau de béton possède une résistance à la flexion supérieure à celle du matériau de béton correspondant sans l'additif pour ciment.

11. Matériau de construction préfabriqué selon la revendication 10, dans lequel ledit matériau est des pavés.

12. Matériau de construction préfabriqué selon la revendication 10 ou 11, dans lequel l'agrégat comprend un matériau de rebut choisi parmi les matériaux des classes identifiées par les codes Eural 01, 10, 17, 19 et 20, ou une combinaison de ceux-ci.

13. Matériau de construction préfabriqué selon l'une quelconque des revendications 10 à 12, dans lequel les agrégats comprennent le sable, la terre, les pierres, les déblais, le laitier ou une combinaison de ceux-ci.

14. Matériau de construction préfabriqué selon la revendication 12, dans lequel le matériau de rebut est une grenaille, un gravier de chemin de fer et un bois de construction et/ou un sable tamisé.

15. Matériau de construction préfabriqué selon l'une quelconque des revendications 10 à 14, dans lequel la résistance à la flexion est 15 %, de préférence 30 %, plus préférablement 50 % plus élevée que la résistance à la flexion du matériau de béton sans l'additif pour ciment.

16. Matériau de construction préfabriqué selon l'une quelconque des revendications 10 à 15, ayant un rapport eau/ciment supérieur à 0,5, de préférence supérieure à 2, plus préférablement supérieur à 3.

17. Matériau de construction préfabriqué selon l'une quelconque des revendications 10 à 16, possédant une résistance à la compression comprise dans la plage allant de 1,5 à 70, de préférence de 5 à 50 N/mm$^2$.

18. Matériau de construction préfabriqué selon l'une quelconque des revendications 10 à 17, possédant un module d'élasticité de 500 à 30 000, de préférence de 10 000 à 20 000 N/mm$^2$.

19. Matériau de construction préfabriqué selon l'une quelconque des revendications 10 à 18, possédant une résistance à la flexion et/ou une résistance à la traction comprise dans la plage allant de 0,5 à 9, de préférence de 2 à 5 N/mm$^2$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2113494 A

- EP 0384070 A